# FASCICULE DE BREVET EUROPEEN

(11) **EP 4 072 007 B1**
(45) Date de publication et mention de la délivrance du brevet: **28.02.2024**
(21) Numéro de dépôt: 21167010.4
(22) Date de dépôt: 06.04.2021
(51) Int. Cl.: H02S 20/10

(54) **SYSTEME PHOTOVOLTAIQUE MODULAIRE**
MODULARES FOTOVOLTAIKSYSTEM
MODULAR PHOTOVOLTAIC SYSTEM

(43) Date de publication de la demande: 12.10.2022
(73) Titulaire: Planair SA, 2314 La Sagne (CH)
(72) Inventeur: Perret, Lionel, 2000 Neuchâtel (CH)
(74) Mandataire: P&TS SA (AG, Ltd.)

(56) Documents cités:
- DE-U1-202021 100 706
- US-A1- 2019 348 552

## Description

### Domaine technique

La présente invention concerne un système modulaire permettant la conception, la réalisation, la modification, l'installation et l'entretien aisés de systèmes photovoltaïques.

### Etat de la technique

Les installations photovoltaïques revêtent déjà une importance significative et leur nombre est toujours en croissance grâce, entre autres, au prix toujours plus faible des panneaux photovoltaïques en silicium. Les installations solaires restent toutefois visuellement imposantes et occupent des surfaces imposantes. En dehors des toitures, il est difficile de trouver des locations pouvant accueillir des nouvelles installations.

On peut pallier ces inconvénients par des installations photovoltaïques polyvalentes qui combinent d'autres fonctions à la production d'énergie. Cela est parfois requis par la loi et les règlements locaux. Il y a dès lors un besoin d'un produit solaire permettant la réalisation d'installations solaires efficaces et économique. Une telle installation photovoltaïque est décrite dans le document
DE 202021100706U1.

Les installations photovoltaïques à vocations polyvalente présentent toutefois des défis spéciaux, par exemple :
- Les installations doivent supporter les rigueurs du climat, tout particulièrement dans les localités alpines et de montagne.
- L'endroit idéal est souvent inaccessible avec des moyens lourds de transport et levage.
- L'impact visuel doit être réduit, tout particulièrement dans les localités à vocation touristique.
- L'installation doit être capable de gérer les inégalités d'ensoleillement des panneaux.

### Bref résumé de l'invention

Il y a dès lors un besoin d'un produit solaire permettant de réaliser des installations solaires de manière efficace, sans avoir recours à des moyens lourds de transport et levage, et permettant un usage polyvalent.

Cet but est atteint par une première variante de l'invention qui fait l'objet des revendications, et notamment par un système modulaire de modules photovoltaïques plats de mêmes dimensions, chacun comprenant deux poteaux parallèles présentant chacun une extrémité inférieure pour l'ancrage vertical à une fondation, les poteaux étant reliés l'un à l'autre par une première traverse et par une deuxième traverse disposés orthogonalement aux poteaux deux panneaux photovoltaïques - préférablement bifaciaux - disposés verticalement dans un espace délimité par les poteaux et les traverses de manière à laisser une fente vide entre les deux panneaux photovoltaïques, dans lequel la première traverse est interrompue en correspondance de la fente vide par un élément mobile pouvant assumer une position fermée pour solidifier la première traverse et une position ouverte permettant de glisser dans la fente un deuxième module photovoltaïque identique ou compatible et de lier en croix le module photovoltaïque et le deuxième module photovoltaïque.

La description et les revendications utilisent les termes "vertical" et "horizontal" pour indiquer l'orientation usuelle du module photovoltaïque lorsqu'il est installé.

L'élément mobile permettant d'ouvrir et fermer la fente peur être réalisé par bras lié à la première traverse par une charnière à une extrémité, lui permettant de pivoter verticalement. La solidité de la traverse en position fermée peut être assuré par un boulonnage, par un verrou, ou par un outre dispositif idoine. L'élément mobile pourrait aussi être configurer pour coulisser dans la direction de la traverse, ou encore être un élément entièrement amovible, solidarisé à la traverse aux deux extrémités par des boulons ou par d'autres moyens de fixation amovibles.

Dans une installation photovoltaïque polyvalente, il n'est pas possible de choisir l'orientation et les distances entre les modules permettant d'obtenir un éclairage optimal et uniforme. Les utilisateurs et/ou les véhicules passant en proximité peuvent d'ailleurs porter des ombres sur les éléments photovoltaïques, réduisant localement le flux lumineux. Afin de gérer ces variations de façon optimale, la fente au milieu du module abrite préférablement des dispositifs électroniques pour la gestion de l'énergie produite, comme des micro-onduleurs ou des optimiseurs. Par ces dispositifs, chaque module peur transférer l'énergie photovoltaïque produite sur un circuit électrique commun en CA ou en CC de manière optimale, indépendamment des conditions d'éclairage ou d'ombrage.

La fente au milieu du module peut également abriter une borne de recharge pour véhicules ou pour batteries, des panneaux lumineux, des terminaux interactifs, des dispositifs d'éclairage, des dispositifs d'interface permettant l'accès à des réseaux de données sans fils ou câblés, ou tout autre dispositif électrique.

Lors de l'installation, la fente centrale est préférablement couverte pour protéger et dissimuler les éléments techniques mentionnés ci-dessus. Pour cela on peut utiliser des caches parallélépipédiques ou cylindriques, ou de n'importe quelle forme appropriée, selon que les modules soient disposées alignée ou croisées.

Préférablement la première traverse, comportant l'ouverture, relie les sommets des poteaux, tandis que la seconde traverse est parallèle et proche du sol. On peut envisager aussi un échange des positions des traverses, cependant.

La fente permettant le croisement des modules est préférablement alignée avec l'axe vertical équidistant des poteaux, pour une modularité maximale. On pourrait envisager toutefois aussi des variantes dans lesquelles la fente est décalée, par exemple à 1/3 ou à 1/4 de la largeur du module.

Les poteaux et les traverses peuvent être réalisé en n'importe quel matériau idoine. Le bois se prête particulièrement bien à cette réalisation pour sa légèreté et parce qu'il est recyclable.

La traverse inférieure est avantageusement continue et porte un circuit électrique préinstallé qui permet de lier le module aux panneaux adjacents par des connecteurs prévus à cet effet au niveau des poteaux.

L'ancrage des modules photovoltaïques est préférablement obtenu par des éléments de fondation à vis, permettant une installation et une reconfiguration aisée, avec un impact sur l'environnement minimal. Préférablement les poteaux sont configurés pour être facilement appairés et solidarisés, réalisant ainsi des alignements réguliers. Plusieurs dispositions sont possibles à cet effet. Préférablement on peut prévoir des équerres à l'extrémité inférieure d'un des poteaux, sur lesquelles on peut poser un poteau d'un module adjacent, sur un élément de fondation unique. Des brides permettent de solidariser les modules et sont utilisable aussi comme poignées pour le transport. Sur des terrains inégaux, on peut employer n'importe quel artifice pour compenser les différences de hauteur entre les pieds des poteaux, par exemple un système de cales coupées à mesure ou de vérins.

Avantageusement, le produit modulaire de l'invention permet de réaliser des installations photovoltaïques complexes par une pluralité de modules simples, assez légers pour pouvoir être mus et posés par une ou deux personnes, sans avoir recours à des moyens de levage mécanique. L'installation électrique est aussi simplifiée par la présence des circuits électriques précablés et des dispositifs de gestion d'énergie dans les modules individuels.

Le produit de l'invention se prête à une pluralité d'usages tels que labyrinthes, parcours didactiques, parking, et ainsi de suite. Les modules peuvent être arrangés pour créer des locaux fermés à des fins techniques ou d'accueil, avec un toit solaire ou conventionnel.

Dans une deuxième variante, l'invention est un produit modulaire pour la réalisation d'installations photovoltaïques comprenant une pluralité de modules photovoltaïques plats chacun comprenant deux poteaux parallèles, présentant chacun une extrémité inférieure pour l'ancrage vertical à une fondation, les poteaux étant reliés l'un à l'autre par une première traverse et par une deuxième traverse disposés orthogonalement aux poteaux deux panneaux photovoltaïques disposés verticalement dans un espace délimité par les poteaux et les traverses de manière à laisser une fente vide entre les deux panneaux photovoltaïques , dans lequel la fente est couverte par une cache abritant des modules électroniques tels que des optimiseurs ou des micro-onduleurs.

Cette deuxième variante peut inclure les caractéristiques optionnelles compatibles de la première, par exemple le fait que la première traverse est interrompue en correspondance de la fente vide par un élément mobile pouvant assumer une position fermée pour solidifier la première traverse et une position ouverte permettant de glisser dans la fente un deuxième module photovoltaïque identique ou compatible et de lier en croix le module photovoltaïque et le deuxième module photovoltaïque, l'utilisation du bois pour la réalisation de poteaux et traverses, un circuit électrique préinstallé dans la deuxième traverse, qui est préférablement la traverse inférieure, des fentes en position excentrée, des modules de fondation à vis, un système de cales pour compenser les inégalités du terrain, et ainsi de suite.

### Brève description des figures

Des exemples de mise en oeuvre de l'invention sont indiqués dans la description illustrée par les figures annexées dans lesquelles :
La figure 1 illustre un module photovoltaïque selon l'invention.
La figure 2 illustre trois modules photovoltaïques installés l'un adjacent à l'autre.
Les figures 2A et 2B sont deux coupes de l'installation de la figure 2 qui montrent des dispositifs de gestion et guide des câbles électriques
La figure 3 montre deux modules photovoltaïques assemblés et liés en croix.
Les figures 4-6 illustrent schématiquement, en vue du haut, un terrain préparé pour l'installation d'un système modulaire photovoltaïque selon un aspect de l'invention et trois possibles dispositions de modules photovoltaïques sur ce terrain.
La figure 7 illustre un usage du système modulaire photovoltaïque de l'invention dans un parking pour véhicules.
Les figures 8-9 illustrent des locaux fermés réalisés avec le système modulaire photovoltaïque de l'invention.

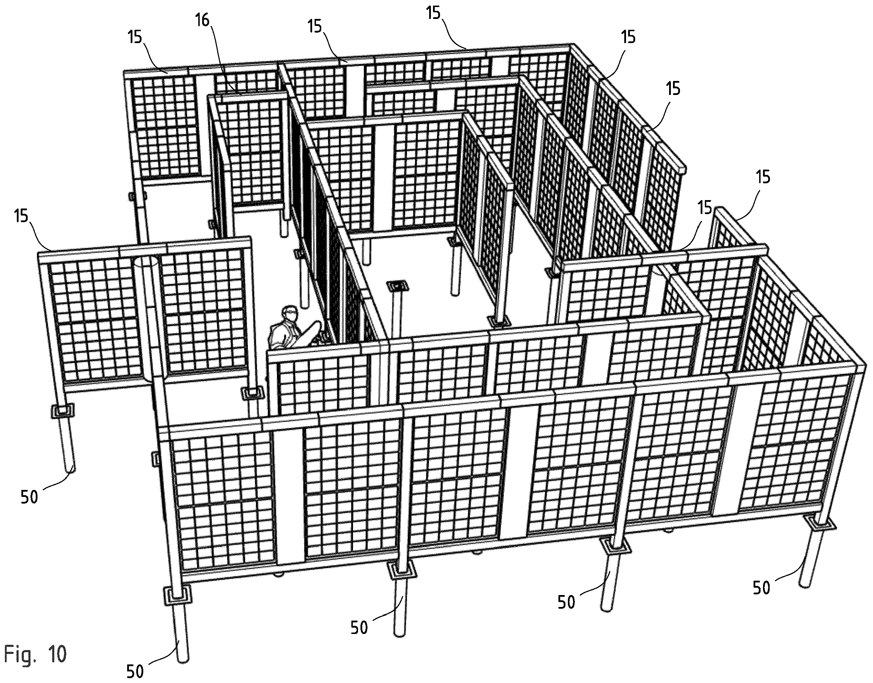

La figure 10 illustre un labyrinthe réalisé par les modules photovoltaïques de l'invention.

### Exemple(s) de mode de réalisation de l'invention

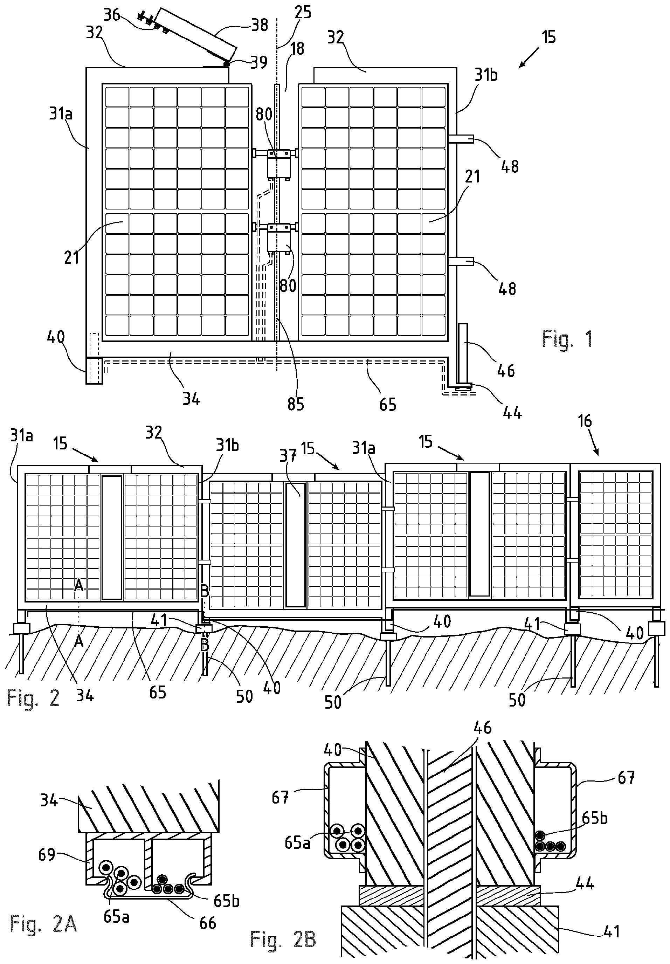

La figure 1 montre un module photovoltaïque 15 selon l'invention, vu de face. Le module comporte deux poteaux verticaux 31a, 31b reliés par deux traverses 32 et 34, l'une supérieure, entre les sommets des poteaux, et l'autre inférieure, proche et parallèle au sol.

Dans l'espace délimité par les poteaux **31a**, **31b**, la première traverse **32** et la deuxième traverse **34** sont placés verticalement deux panneaux photovoltaïque **21**, préférablement bifaciaux, en sorte que le module photovoltaïque **15** est prêt à générer de l'électricité lorsqu'il est installé verticalement.

Les panneaux photovoltaïques **21** sont séparés au milieu par une fente ouverte **18**, essentiellement aligné avec un axe vertical **25** équidistant des poteaux **31a**, **31b**. On pourrait imaginer aussi des variantes dans lesquelles la fente **18** n'est pas centrée symétriquement entre les poteaux.

L'espace libre **18** entre les panneaux permet de loger des dispositifs de gestion d'énergie **80**, tel que des optimiseurs ou des micro-onduleurs. Dans une installation photovoltaïque polyvalente, en effet, on ne peut pas assurer que tous les panneaux photovoltaïques reçoivent le même rayonnement solaire. Il est opportun que chaque panneau dispose de ses propres dispositifs de gestion **80** configurés pour transmettre l'énergie générée à un circuit commun de manière optimale, même lorsque certains des panneaux sont moins illuminés, voire ombragés. On peut également utiliser l'espace **18** entre les panneaux solaires pour accueillir d'autres éléments techniques, comme un connecteur pour la recharge de batteries.

Dans des situations où l'éclairage est optimal et les modules sont positionnés de façon à éviter des effets d'ombrage, on pourra, de façon connue, simplifier l'installation et utiliser un nombre moindre d'optimiseur et/ou onduleurs, chacun desservant plusieurs modules photovoltaïques connectés en série et/ou en parallèle.

L'espace libre **18** entre les panneaux peut aussi être utilisé pour d'autres dispositifs, par exemple des panneaux d'information, des dispositifs de communication, des compteurs d'énergie ou autre, selon les besoins.

Les dispositifs de gestion **80** sont préférablement montés sur des barres de montage amovibles **85** ou un autre support amovible, et peuvent être déplacés lors de l'installation. Comme on le verra par la suite, cela permet d'imbriquer deux modules identiques ou compatibles en croix. Les dimensions du module peuvent varier selon les besoins. Dans un cas typique, la largeur d'un module photovoltaïque **15** peut être de 2,4 m, dont 0,3 occupés par la fente centrale **18**.

Le module **15** comporte également un circuit électrique préinstallé **65** allant d'un poteau à l'autre, en sorte de pouvoir connecter aisément une pluralité de modules compatibles juxtaposés. Le circuit électrique **65** court préférablement le long de la deuxième traverse inférieure **34**.

La figure 2A montre un système de guidage et gestion de câbles intégré à la traverse **34**, en correspondance avec la section A-A de la figure 2. Un guide **69**, préférablement métallique est fixé sous la traverse **34** et permet le guidage des conducteurs **65a**, **65b** d'une extrémité à l'autre de cette dernière. Des cloisons longitudinales peuvent être prévues pour séparer les câbles selon leur fonction ou niveau de tension. Par exemple, des câbles en CA à 240V et des câbles CC à basse tension, ou des câbles de communication. Le nombre de compartiments et de cloisons n'est pas limité. Un couvercle **66** permet l'accès, par exemple pour permettre les opérations de maintenance.

Entre deux modules photovoltaïques **15**, les conducteurs **65a**, **65b** sont couverts par des caches **67**, préférablement métalliques, visibles sur la figure 2B, en correspondance avec la section B-B de la figure 2. Les caches **67** protègent et dissimulent les câbles **65a** et **65b** et sont fixées de manière amovible sur les cales supérieures **40**. La liaison entre un module et l'autre peut prévoir des connecteurs, dans les caches **67** ou dans le guide **69**. La séparation des circuits au niveau du poteau peut avoir lieu en utilisant les deux côtés avant/arrière, comme illustrés, ou par es cloisons.

Les poteaux sont configurés pour se connecter avec les poteaux de modules identiques ou compatibles, de façon à construire des alignements. Dans la variante représentée, le poteau **13b** à droite sur la figure) comporte une équerre inférieure **44** avec un axe vertical **46**. L'axe **46** est configuré pour s'engager dans une cavité de forme correspondante dans le poteau **13a** d'un autre module photovoltaïque. Les colliers **48** permettent de solidariser les modules et peuvent servir aussi de poignée pour le levage.

La figure 2 illustre un alignement de trois modules photovoltaïques **15** et un module de rallonge **16**, de largeur réduite, liés ensemble comme décrit ci-dessus. Les fentes **18** abritant les modules de gestion **80** sont couvertes par des caches **37** qui servent à protéger et dissimuler les modules **80**, et peuvent avoir aussi une fonction antibruit. Pour cette application qui ne prévoient pas de liaisons en croix, les éléments centraux électriques **80** et les caches **37** peuvent être entièrement prémontées.

Des cales **40, 41** au-dessus et au-dessous des équerres **44** permettent de compenser les inégalités du terrain. Préférablement, les cales **41** basses intègrent aussi une conduite pour le circuit électrique **65** mentionné auparavant. Avantageusement, deux poteaux juxtaposés partagent une fondation commune **50**. On peut utiliser des fondations vissées directement dans le sol, en béton, ou n'importe quel moyen de fondation approprié.

Revenant à la figure 1, la traverse supérieure **32** est interrompue au niveau de la fente **18** et comporte un élément mobile **38** qui, en position ouverte, permet l'accès à la fente **18** par le haut. On peut réaliser cet élément par un bras lié à la traverse par la charnière **39**, par un bras coulissant, ou par n'importe quel moyen idoine. En position fermée l'élément mobile **38** est fixé solidement à la traverse **32**, par exemple par un boulonnage **36**. On peut envisager aussi de fermer la fente **18** par une pièce totalement amovible fixée de part et d'autre à la traverse **32** par des boulons ou d'autres moyens de fixation démontables.

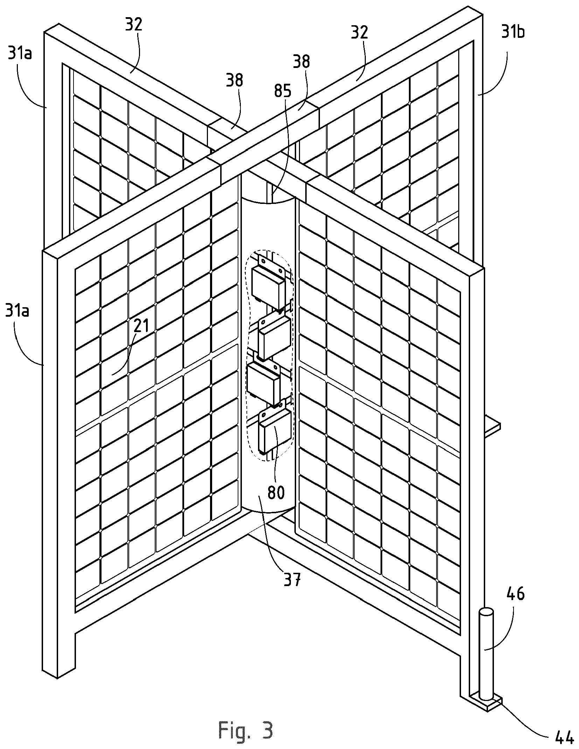

La figure 3 montre deux modules photovoltaïques identiques liés en croix. Le cache cylindrique **37** est partiellement transparent pour laisser voir les modules de gestion d'énergie **80** à l'intérieur. En ce cas, les barres de montage **85** et le cache **37** sont amovibles, de façon à pouvoir installer les dispositifs électriques **80** seulement après la liaison en croix des modules **15**, dans l'espace vide central.

Les figures de 4 à 6 montrent trois dispositions d'un ensemble de modules photovoltaïques sur un même terrain, en trois configurations. Un réseau régulier d'éléments de fondation **70** est réalisé préalablement dans le terrain. Les fondations **70** sont disposées sur le terrain en quinconce (soit dans un réseau carré régulier incliné de 45°), l'espacement entre deux fondations alignées verticalement ou horizontalement correspondant à la distance entre les poteaux **31a**, **31b** d'un module de base. Cette disposition est avantageuse car elle permet de réaliser une multiplicité d'arrangements sans créer des nouvelles fondations, mais elle n'est pas la seule possible.

Les modules photovoltaïques **15** et **16** de l'invention sont arrangés dans les fondations de manière à créer une structure voulue, par exemple un labyrinthe pour des activités ludiques, et une zone annexe fermée. Les fondations non utilisées peuvent être fermées par des capots. La structure croisée donne une plus grande résistance aux poussées latérales, par exemple dues au vent ou à la neige.

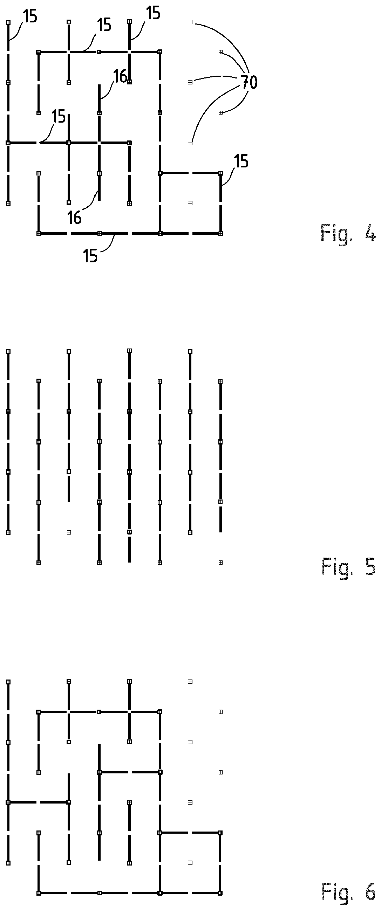

Les figures 5 et 6 montrent des autres dispositions des mêmes modules photovoltaïques sur le même terrain. Les rangées rectilignes de la figure 5 facilite l'entretien, par exemple le fauchage, tandis que l'arrangement de la figure 6 est un tracé obtenu par les mêmes modules de la figure 4, avec quelques variantes pour diversifier l'expérience des utilisateurs.

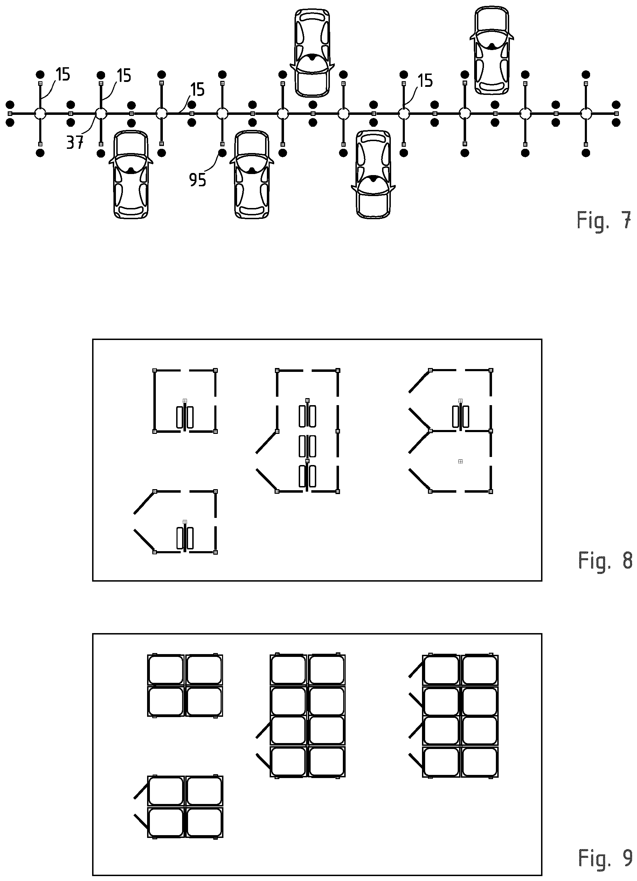

Dans une variante avantageuse, la largeur des modules photovoltaïques est compatible avec les normes de dimensionnement des parkings pour voiture de façon à pouvoir réaliser des "parkings solaires" comme illustré sur la figure 7. Les espaces délimité par les caches 37 au centre des modules peuvent abriter aussi des bornes de recharge pour véhicules électriques, des parcomètres, ou des dispositifs de communication. Selon les exigences, on pourra prévoir des protections 95, par exemple des potelets, des jardinières ou des terre-pleins, pour empêcher les collisions entre les véhicules et l'installation solaire.

De manière importante, les modules photovoltaïques de l'invention permettent le câblage des places de parc par le circuit 65 intégré à leur structure, évitant ainsi la pose de câbles enterrés.

Les modules photovoltaïques de l'invention peuvent être utilisés créer des espaces fermées, accessibles par des portes ouvrant sur une ou plusieurs parois, comme il est visible sur les figures 8 et 9. Ces espaces peuvent servir de local technique, par exemple pour la liaison à un réseau de distribution électrique, pour abriter des onduleurs, mais aussi d'espace d'accueil, de jeu, d'entrepôt, et ainsi de suite. Les locaux peuvent être couvert par des panneaux solaires, comme illustré sur la figure 9, ou avec une toiture conventionnelle.

Le module de base **15** et le module d'extension **16** ont été ici décrits à titre d'exemple. L'invention n'est pas pourtant limitée à ces modes de réalisation spéciaux mais elle inclut toutes les variantes et équivalents impliqués par les revendications annexées. Entre autres, le système de l'invention peut inclure, en complément des modules de base avec deux panneaux photovoltaïques, aussi des modules dans lequel un ou deux panneaux supérieurs sont remplacés par des éléments passifs, par des panneaux en bois, ou par des panneaux publicitaires. Selon les opportunités, on pourrait aussi concevoir des modules avec trois, quatre, ou plus panneaux photovoltaïques. L'invention pourrait aussi prévoir des modules que, tout en restant compatibles avec le module de base, n'ont pas de fente centrale, et ne peuvent pas être croisés avec, mais seulement accolés à un autre module, des modules avec un toit, et beaucoup d'autres variantes.

La figure 6 montre un exemple de labyrinthe qu'on peut réaliser en combinant modules de base **15** et rallonges **16**.

### Numéros de référence employés sur les figures

- **15**: module photovoltaïque
- **16**: module réduit
- **18**: fente
- **21**: panneau photovoltaïque
- **25**: axe vertical
- **31a,b**: poteau
- **32**: première traverse
- **34**: deuxième traverse
- **36**: boulonnage
- **37**: cache
- **38**: élément mobile
- **39**: charnière
- **40**: cale haute
- **41**: cale basse
- **44**: équerre
- **46**: axe
- **48**: colliers
- **50**: fondation à vis
- **65**: circuit électrique
- **65a**: câbles
- **65b**: câbles
- **66**: couvercle
- **67**: cache
- **69**: guide-câbles
- **70**: fondation
- **80**: dispositif de gestion d'énergie
- **85**: support
- 95:

## Revendications

1. Produit modulaire pour la réalisation d'installations photovoltaïques comprenant une pluralité de modules photovoltaïques (**15**) plats de mêmes dimensions, chacun comprenant deux poteaux (**31a**, **31b**) parallèles, présentant chacun une extrémité inférieure pour l'ancrage vertical à une fondation, les poteaux étant reliés l'un à l'autre par une première traverse (**32**) et par une deuxième traverse (**34**) disposés orthogonalement aux poteaux (**31a**, **31b**) deux panneaux photovoltaïques (**21**) disposés verticalement dans un espace délimité par les poteaux (**31a**, **31b**) et les traverses (**32, 34**) de manière à laisser une fente vide (**18**) entre les deux panneaux photovoltaïques (**21**), dans lequel la première traverse (**32**) est interrompue en correspondance de la fente vide (**18**) par un élément mobile (**38**) pouvant assumer une position fermée pour solidifier la première traverse (**32**) et une position ouverte permettant de glisser dans la fente (**18**) un deuxième module photovoltaïque (**15**) identique ou compatible et de lier en croix le module photovoltaïque et le deuxième module photovoltaïque.

2. Produit modulaire selon la revendication précédente, dans lequel la fente (**18**) est couverte par une cache (**37**) abritant des modules électroniques (**70**) de gestion d'énergie et/ou une borne de recharge pour véhicules.

3. Produit modulaire selon l'une quelconque des revendications précédentes, dans lequel les panneaux photovoltaïques (**21**) sont bifaciaux.

4. Produit selon l'une quelconque des revendications précédentes, dans lequel la fente (**18**) est alignée avec un axe vertical (**25**) équidistant des poteaux (**31a**, **31b**).

5. Produit selon l'une quelconque des revendications précédentes, comportant la première traverse (**32**) est positionnée supérieurement et la deuxième traverse (**34**) est positionnée inférieurement.

6. Produit selon l'une quelconque des revendications précédentes, dans lequel les traverses (**32**, **34**) et les poteaux sont en bois.

7. Produit selon l'une quelconque des revendications précédentes, dans lequel l'élément mobile (**38**) est un bras pivotant autour d'une extrémité, pouvant assumer une position verticale ouverte, et une position fermée essentiellement alignée avec la première traverse.

8. Produit selon l'une quelconque des revendications précédentes comprenant un dispositif de guidage pour câbles (**69**) fixé parallèlement à la deuxième traverse (**34**) comprenant un circuit électrique (**65**) entre les poteaux (**31a**, **31b**) permettant de relier électriquement un module photovoltaïque adjacente.

9. Produit selon l'une quelconque des revendications précédentes, dans lequel un des poteaux (**32**) porte une équerre (**32**) à l'extrémité inférieure et des brides (**44**) permettant de solidariser le module photovoltaïque avec un module photovoltaïque identique ou compatible adjacent.

10. Produit selon l'une quelconque des revendications précédentes, comprenant une pluralité de modules photovoltaïques arrangés pour délimiter des places de stationnement pour véhicules

11. Produit selon la revendication précédente lors qu'elle dépend de la revendication 8, dans lequel la fente (**18**) abrite une borne de recharge pour véhicules alimentée par un circuit électrique contenu dans le dispositif de guidage (**69**).

## Patentansprüche

1. Modulares Produkt zur Ausführung von Photovoltaikanlagen, die eine Mehrzahl von flachen Photovoltaikmodulen (15) gleicher Abmessungen umfassen, wobei jedes zwei parallele Pfosten (31a, 31b) umfasst, die jeweils ein unteres Ende zur vertikalen Verankerung an einem Fundament aufweisen, wobei die Pfosten miteinander durch einen ersten Riegel (32) und durch einen zweiten Riegel (34) verbunden sind, die senkrecht zu den Pfosten (31a, 31b) angeordnet sind, zwei Photovoltaikpaneele (21) vertikal in einem durch die Pfosten (31a, 31b) und die Riegel (32, 34) begrenzten Raum so angeordnet sind, dass ein leerer Spalt (18) zwischen den beiden Photovoltaikpaneelen (21) gelassen wird, wobei der erste Riegel (32) an dem leeren Spalt (18) durch ein mobiles Element (38) unterbrochen wird, das eine geschlossenen Stellung einnehmen kann, um den ersten Riegel (32) zu stabilisieren, und eine geöffnete Stellung, die es ermöglicht, in den Spalt (18) ein identisches oder kompatibles zweites Photovoltaikmoduls (15) zu schieben und das Photovoltaikmodul und das zweite Photovoltaikmodul kreuzförmig zu verbinden.

2. Modulares Produkt nach dem vorhergehenden Anspruch, bei dem der Spalt (18) durch eine Blende (37) abgedeckt wird, die elektronische Module (70) zur Energieverwaltung und/oder eine Ladesäule für Fahrzeuge aufnimmt.

3. Modulares Produkt nach einem der vorhergehenden Ansprüche, bei dem die Photovoltaikpaneele (21) bifazial sind.

4. Produkt nach einem der vorhergehenden Ansprüche, bei dem der Spalt (18) auf eine zu den Pfosten (31a, 31b) abstandsgleiche vertikale Achse (25) ausgerichtet ist.

5. Produkt nach einem der vorhergehenden Ansprüche, beinhaltend der erste Riegel (32) oben positioniert ist und der zweite Riegel (34) unten positioniert ist.

6. Produkt nach einem der vorhergehenden Ansprüche, bei dem die Riegel (32, 34) und die Pfosten aus Holz sind.

7. Produkt nach einem der vorhergehenden Ansprüche, bei dem das mobile Element (38) ein um ein Ende schwenkbarer Arm ist, der eine geöffnete vertikale Stellung einnehmen kann und eine geschlossene Stellung, die im Wesentlichen auf den ersten Riegel ausgerichtet ist.

8. Produkt nach einem der vorhergehenden Ansprüche, umfassend eine Führungsvorrichtung für Kabel (69), die parallel zu dem zweiten Riegel (34) befestigt ist, umfassend eine elektrische Schaltung (65) zwischen den Pfosten (31a, 31b), die es ermöglicht, ein benachbartes Photovoltaikmodul elektrisch zu verbinden.

9. Produkt nach einem der vorhergehenden Ansprüche, bei dem einer der Pfosten (32) einen Winkel (32) an dem unteren Ende trägt und Flansche (44), die es ermöglichen, das Photovoltaikmodul an einem benachbarten identischen oder kompatiblen Photovoltaikmodul zu befestigen.

10. Produkt nach einem der vorhergehenden Ansprüche, umfassend eine Mehrzahl von Photovoltaikmodulen, die dazu gestaltet sind, Parkplätze für Fahrzeuge zu begrenzen

11. Produkt nach dem vorhergehenden Anspruch, wenn dieser von Anspruch 8 abhängig ist, bei dem der Spalt (18) eine Ladesäule für Fahrzeuge aufnimmt, die durch eine in der Führungsvorrichtung (69) enthaltene elektrische Schaltung versorgt wird.

## Claims

1. Modular product for creating photovoltaic installations comprising a plurality of flat photovoltaic modules (15) of the same dimensions, each comprising two parallel posts (31a, 31b), each having a lower end for vertical anchoring to a foundation, the posts being connected to one another by a first crossmember (32) and by a second crossmember (34) that are disposed orthogonal to the posts (31a, 31b) two photovoltaic panels (21) disposed vertically in a space delimited by the posts (31a, 31b) and the crossmembers (32, 34) so as to leave an empty slot (18) between the two photovoltaic panels (21), wherein the first crossmember (32) is interrupted in correspondence with the empty slot (18) by a mobile element (38) that is able to assume a closed position so as to solidify the first crossmember (32) and an open position making it possible to slide into the slot (18) a second photovoltaic module (15) that is identical or compatible and to connect, crosswise, the photovoltaic module and the second photovoltaic module.

2. Modular product according to the preceding claim, wherein the slot (18) is covered by a shield (37) housing electronic energy management modules (70) and/or a recharging point for vehicles.

3. Modular product according to either one of the preceding claims, wherein the photovoltaic panels (21) are two-sided.

4. Product according to any one of the preceding claims, wherein the slot (18) is aligned with a vertical axis (25) equidistant from the posts (31a, 31b).

5. Product according to any one of the preceding claims, having the first crossmember (32) is positioned at the top and the second crossmember (34) is positioned at the bottom.

6. Product according to any one of the preceding claims, wherein the crossmembers (32, 34) and the posts are made of wood.

7. Product according to any one of the preceding claims, wherein the mobile element (38) is an arm pivoting about one end, which is able to assume an open vertical position, and a closed position essentially aligned with the first crossmember.

8. Product according to any one of the preceding claims comprising a guiding device for cables (69) that is fastened parallel to the second crossmember (34) comprising an electrical circuit (65) between the posts (31a, 31b) making it possible to electrically connect an adjacent photovoltaic module.

9. Product according to any one of the preceding claims, wherein one of the posts (32) bears a bracket (32) at the lower end and flanges (44) making it possible to secure the photovoltaic module to an adjacent identical or compatible photovoltaic module.

10. Product according to any one of the preceding claims, comprising a plurality of photovoltaic modules arranged to delimit parking spaces for vehicles

11. Product according to the preceding claim when it is dependent on Claim 8, wherein the slot (18) houses a recharging point for vehicles that is supplied with power by an electrical circuit contained in the guiding device (69) .
